(19) **Europäisches Patentamt**
**European Patent Office**
**Office européen des brevets**

(11) **EP 1 535 433 B1**

(12) **EUROPEAN PATENT SPECIFICATION**

(45) Date of publication and mention
of the grant of the patent:
**30.01.2008 Bulletin 2008/05**

(51) Int Cl.:
***H04L 12/56*** (2006.01)

(21) Application number: **03792917.1**

(86) International application number:
**PCT/SE2003/001233**

(22) Date of filing: **21.07.2003**

(87) International publication number:
**WO 2004/019570 (04.03.2004 Gazette 2004/10)**

(54) **A METHOD FOR LOAD BALANCING USING BOTTLENECK LOAD BALANCING**

VERFAHREN ZUM LASTAUSGLEICH UNTER VERWENDUNG VON ENGPASS-LASTAUSGLEICH

PROCEDE D'EQUILIBRAGE DE CHARGES AU MOYEN D'UN EQUILIBRAGE DE CHARGES PAR
GOULOT D'ETRANGLEMENT

(84) Designated Contracting States:
**AT BE BG CH CY CZ DE DK EE ES FI FR GB GR
HU IE IT LI LU MC NL PT RO SE SI SK TR**
Designated Extension States:
**LV**

(30) Priority: **20.08.2002 SE 0202485**

(43) Date of publication of application:
**01.06.2005 Bulletin 2005/22**

(73) Proprietor: **TeliaSonera AB
123 86 Farsta (SE)**

(72) Inventors:
• **LINDBERG, Per
S-116 43 Stockholm (SE)**
• **KARLSSON, Per-Olof
S-123 42 Farsta (SE)**

(74) Representative: **Akerman, Marten Lennart et al
Albihns Malmö AB
Box 4289
203 14 Malmö (SE)**

(56) References cited:
**US-A1- 2001 043 585     US-A1- 2002 163 884**

• **CASELLAS ET AL.: 'Packet Based Load Sharing
Schemes in MPLS Networks' UNIVERSAL
MULTISERVICE NETWORKS, 2002. ECUMN 02,
2ND EUROPEAN CONF. ON PUBL. April 2002,
pages 18 - 28, XP002974388**
• **FORTZ ET AL.: 'Internet Traffic Engineering by
Optimizing OSPF weights' INFOCOM 2000. 19TH
ANNUAL JOINT CONF. OF THE IEEE COMPUTER
AND COMMUNICATIONS SOCIETIES. PROC. vol.
2, March 2000, pages 519 - 528, XP001042765**

**Description**

**FIELD OF THE INVENTION**

The present invention relates in general to improved dynamic load balancing for IP routes traffic and especially for Resource-directive load balancing.

**BACKGROUND**

Traditionally IP routes traffic from one router to another on one path only. It is today also possible to have a fixed equal share between multiple shortest paths Equal Cost MultiPath, ECMP.

Highly loaded links give a degraded quality of service due to delay, packet loss and reduced throughput. Thus, there are reasons to divert an adjustable amount of traffic to less loaded parts of the network, which is called load balancing. With a well working load balancing one could achieve:

- Minimisation of traffic disturbances due to high load
- Deferral of link extensions
- Simplified manual management
- Allow alternative network topologies

Load balancing requires an adjustable load sharing. The terminology used here is that load balancing refers to the effect on the network while load sharing defines how an individual router, when forwarding packets, shares the flow to a certain destination between its outgoing links. For a node the load sharing on its outgoing arcs a is for destination t defined by load sharing parameters $\Phi_{a,t}$, the share of flow to destination t to be routed on arc a. This means that for each node n the parameters must satisfy

$$\sum_{\substack{\text{arcs } a \\ \text{leaving } n}} \Phi_{a,t} = 1$$

Load balancing in packet networks has been an issue in international research for a long time with very little result on the IP networks of today.

US 2001/0 043 585 A1, published on Nov. 22, 2001, describes a dynamic traffic distribution control method for communication networks.

Robert G. Gallager, [GAL77], "A minimum delay routing algorithm using distributed computation", IEEE Trans. on Comm. Vol. Com-25, No 1 Jan. 1977, gave useful relations between basic parameters for distributed load balancing. The target was overall minimisation of delay. Load sharing parameters were successively updated based on marginal delay. The method was for stationary input traffic proven to converge although the guaranteed convergence rate was very slow.

Before Internet, in ARPANET, link weights were updated to reflect delay, thus directing traffic towards minimum delay paths. At high load, this caused severe route instability and the approach had to be revised by A. Khanna and J. Zinky, [KZ89], "The revised ARPANET routing metric", Proc. of ACM SIGCOMM'89, pp 45-56. Austin TX, Sept. 1989. In Internet, the adaptive routing was abandoned.

B. Fortz and M. Thorup, [FT00], "Internet traffic engineering by optimising OSPF weights", Proceedings of INFOCOM'2000, March 2000, studied load balancing by optimising the link weights in Open Shortest Path First OSPF with ECMP. The network studied was the proposed AT&T WorldNet. They succeeded to get close to a target obtained by solving a multi-commodity flow problem with piecewise linear convex link cost functions. They also constructed a network example where ECMP for any link weights gives a poor load balancing.

For a suitable load balancing formulation Yufei Wang, Zheng Wang and Leah Zhang, [WWZ01], "Internet traffic engineering without full mesh overlaying", Proc. of INFOCOM'2001, April 2001, gave a theoretical proof that there exist for the optimal solution link weights (non-integer) such that all the flows are routed on shortest paths. However, they give no clue for how to split the flow in case of several shortest paths.

At the Swedish Institute of Computer Science, have investigated load balancing by a centralised flow optimisation formulation. H. Abrahamsson, B. Ahlgren, J. Alonso, A. Andersson and P. Kreuger, [AAAAK], "A multi path routing algorithm for IP networks based on flow optimisation", also investigated multi path forwarding techniques

An effort to bring load balancing closer to realization was the standardisation work on OMP, Optimised MultiPath, at IETF [Vil99a]. The idea is that links with a changed load will be signalled over the network and that nodes routing flows on paths with this link as a critical segment, will shift flow to or from that path. The amount of flow to shift is determined by an adjustment value that is increased when successive updates are made in the same direction and reduced when they change direction. Link weights are not updated but are used to avoid routing loops, by utilising either links on shortest paths or by forwarding packets to any adjacent node closer to the destination. The work on OMP stagnated and the drafts were not turned into standards.

There is also a version based on MPLS, called MPLS-OMP by C. Villamizar, [Vil99b], "MPLS Optimised Multipath (MPLS-OMP)", Internet Draft, Aug. 18, 1999. It is similar to the OSPF and IS-IS versions of OMP, but there are some MPLS related differences. For example, the ingress router must set up MPLS Label Switched Paths according to the rules of MPLS. The set up of new paths is done after persistent high utilisation, and extra paths are removed when the utilisation is persistent low.

By the architecture of IP, load balancing needs to be implemented in a distributed way. This corresponds to a decomposition of the global optimisation problem - each router has to take decisions based on limited information. Global convergence is possible by signalling crucial data between the routers. If the data signalled is of type link weights or derivatives of link "cost" functions, it is a price-directive decomposition. In this case, it is proper to sum the values along a path. If the data exchanged are link loads as in OMP, it is more a resource-directive decomposition. It is the maximal link load over a path that is critical.

Update interval

Load balancing aims at avoiding overloaded links by diverting traffic to less loaded paths. This requires recurrent automatic updating of the routing based on traffic measurements. There needs to be a strong correlation between the measured traffic and the traffic of the next period. One needs to study traces of the link loads to justify the use of a certain routing update period.

Some aspects that affects the choice of the update period:

- The additional load by the update procedure.
- The time it takes to signal updated data over the network
- The need to get a quick convergence to a new traffic situation
- The traffic disturbance when some flows get a changed routing

C. Villamizar, [Vil99a], "OSPF Optimised Multipath (OSPF-OMP)", Internet Draft, Aug. 18, 1999, describe OSPF-OMP loading information for a link is flooded at intervals dependent the size of the load. The minimal interval is 30 seconds.

S. Vutukury and J.J. Garcia-Luna-Aceves, [VG99], "A simple approximation to minimum delay routing", ACM SIGCOMM, Sept. 1999, describe some simulated results were presented for an approximation of Gallager's approach with update intervals from 2 to 10 seconds for the load sharing parameters. They also envisaged an update of link weights that should occur at intervals at least a few times longer. These frequent updates may however give high processor load and may give a large random variation in load measurement. An update of load sharing parameters in intervals of 15 minutes should also give an improved throughput, but then one wants a fast convergent algorithm. The observable stability of daily traffic profiles may in fact even motivate a load balancing updated just once a week based on the busy hour traffic, provided that the busy hours are coincident.

Forwarding techniques for load sharing

To achieve load balancing a router must be able to share the traffic to a destination between several outgoing links in adjustable proportions. The forwarding technique should satisfy the requirements:

- Low overhead
- Path integrity for individual flows
- Load sharing in arbitrary proportions
- Precision in load sharing
- Adjustable with minimum path changes for current flows.

In Zhiruo Cao, Zheng Wang, Ellen Zegura, [CWZ00], "Performance of Hashing-Based Schemes for Internet Load Balancing", IEEE INFOCOM 2000, Tel-Aviv March 2000, is evaluated by hashing using a 16-bit Cyclic Redundant Checksum on the 5-tuple of source address, destination address, source port, address port and protocol number gives an excellent precision. To give a load sharing of arbitrary and adjustable proportions the use of table-based hashing is recommended. The hashing produces a number from 1 to M. Each value is through a table assigned to one of the links. By having M larger than the number of links, each link can take the traffic of a suitable number of values. A larger M gives a finer granularity.

Influence on network planning

Capacity extension planning, traditionally based on measurements of the individual links, will be affected by load balancing. If long detours are used it may be difficult to find the link with the highest need for extension. More than dimensioning single links one needs to dimension the capacity of cuts in the network, a method earlier used for transport network planning. If the load balancing is based on updated link weights, one should rather extend links with high weights. Generally, one should extend the network in the direction of a target network that has been designed for a forecasted traffic matrix.

**SUMMARY OF THE INVENTION**

The present invention relates to improved dynamic load balancing for IP routes traffic especially for Resource-directive load balancing.

A method achieves a flexible, fine-tuned and fast converging load balancing in IP networks through signalling of link loads.

A router should use the method to determine the load sharing on its outgoing links for traffic to each destination. It is based on link loads. The link weights and the lengths of the shortest paths as calculated by ordinary IP routing protocols, which are only used to determine the allowed routing alternatives. To decide the load sharing on the outgoing links for traffic to a certain destination t, a router uses bottleneck load values for each of the alternative routes. Bottleneck loads are calculated through a special protocol starting from each destination t, such that they represent the maximal link load along a path and an average value of the maximal link loads in case that a path is split up in more than one.

The new load sharing parameters for the outgoing links at a router n for a destination t are in principle updated by setting them proportional to the old value divided by the bottleneck load. A slight modification is done to allow load sharing parameters to become 0 and also to get positive if they were 0 from start.

Bottleneck Load Balancing is a simple and well-defined approach of the type Resource-directive load balancing. Fixed routing metric can be used in Bottleneck Load Balancing. Generally it is impossible to obtain load balancing results with the same load on all links. When a flow can choose between two paths one should aim for a load balancing that gives the same maximal loads on the two paths. Therefore it is reasonable that load balancing is performed by analysing such path bottlenecks. The invention proposes a load balancing method based on this idea. The approach has similarities to OMP [Vi199a] but there are the following differences:

- Load defined either as carried load or offered load but not "equivalent loading" based on TCP behaviour.
- The common bottleneck of a set of parallel paths is defined as a weighted average and not the minimum.
- A simple formula for the updating of load sharing parameters.

Bottleneck Load Balancing updates the load sharing parameters without changing the link weights. It uses a simple expression to update the load sharing, avoiding a large number of the parameters (such as various thresholds) used in OMP. The proposal includes a definition of the Bottleneck Load, as this is not evident in the presence of downstream bifurcations.

Load sharing parameters $\Phi_{a,t}$ at a node are updated from their old values and the values $R_{a,t}$, the bottleneck load to destination t for traffic offered to link a. Of course, a link with a high bottleneck load should have its share reduced. In principle, the updated load sharing parameters at a node should be proportionate to $\Phi_{a,t}/R_{a,t}$. However, to avoid uncontrolled behaviour for values close to 0 the chosen update formula is to set the new $\Phi_{a,t}$ for arcs a leaving node n proportionate to

$$\max\left(0, \frac{\Phi_{a,t} + \varepsilon}{R_{a,t} + \delta} - \frac{\varepsilon}{R_t^n + \delta}\right)$$

where $\varepsilon$ and $\delta$ are small positive numbers.

The bottleneck load parameters for arcs $R_{a,t}$ and for nodes $R_t^n$ are computed recursively from the link loads

$\rho_a$ by starting from destination $t$ ($n_a$ denotes the end node of arc a) :

$$R_t^t = 0$$

$$R_{a,t} = \max\left(\rho_a, R_t^{n_a}\right)$$

and

$$R_t^n = \sum_{\substack{\text{arcs } a \\ \text{leaving } n}} \Phi_{a,t} R_{a,t}$$

if $n \neq t$

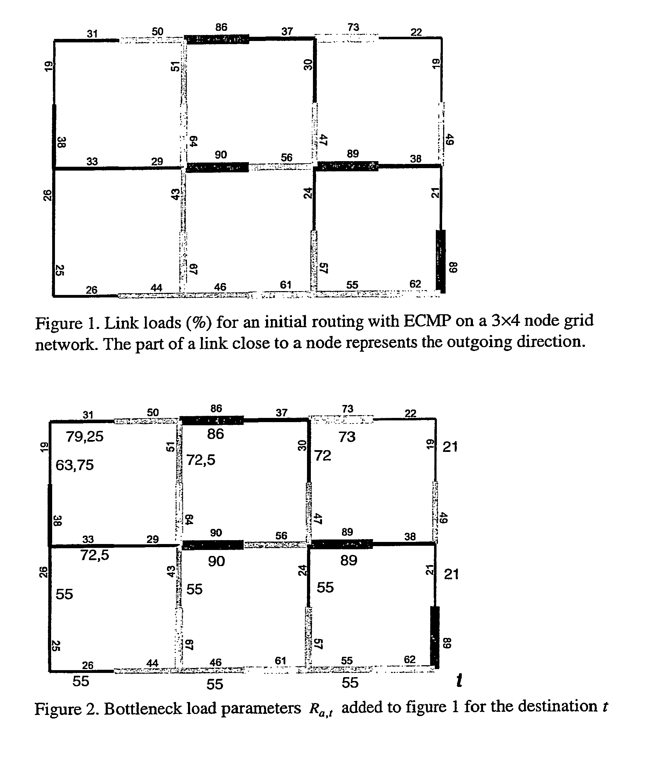

This can in the network be realized by a straight forward signalling process starting from node $t$, where each node computes and signals its value of $R_t^n$ to its neighbours when it has received the values from the downstream nodes. One would need one signalling process for each destination (egress router) $t$. The result of computing $R_{a,t}$ from $\rho_a$, see figure 2.

As for OMP, the load balancing could be made on paths of equal lengths or by allowing forwarding to any node closer to the destination.

Advantages

IP load balancing has the potential to improve the network efficiency for a large range of different update intervals There are forwarding techniques to provide a flexible and precise load sharing:

❖ The proposal "Bottleneck Load Balancing" has in the tests shown good performance and is characterized by
➢ a simple concept
➢ a straight forward signalling protocol
➢ fast and robust convergence

**BRIEF DESCRIPTION OF THE DRAWINGS**

Figure 1, Link loads (%) for an initial routing with ECMP on a 3×4 node grid network.
Figure 2, Bottleneck load parameters $R_{a,t}$ added to figure 1 for the destination $t$
Figure 3, Link loads obtained after 10 iterations.
Figure 4, Reduction of maximal link load for 11 random traffic matrices.
Figure 5, Test of load balancing based on outgoing link load only.
Figure 6, Four options compared for an overloaded 12 node grid network.
Figure 7, Compared options for a 20 node grid network.

**DETAILED DESCRIPTION**

Formulation of load balancing as flow optimisation A finite network $(N,A)$ of nodes $n \in N$ and directed arcs $a \in A$. Assume that there always is an arc of opposite direction, which is denoted $\bar{a}$. The network is defined by
$n_a$ the terminal node of link $a$
$n_{\bar{a}}$ the initial node of link $a$
$c_a$ the capacity of link $a$
Another way to describe the network structure is the $|N| \times |A|$ node-arc incidence matrix

$$\mathbf{A} = \left(A_{n,a}\right) \quad A_{n,a} = \begin{cases} -1 & \text{if} & n = n_{\bar{a}} \\ 1 & \text{if} & n = n_a \\ 0 & & \text{otherwise} \end{cases}$$

There is a demand for flow in the network that constitutes a multi-commodity flow demand. With $k$ denoting a commodity, the demand can be expressed in a node-demand incidence matrix $B=(B_{n,k})$ where $B_{n,k}$ denotes the flow demand for commodity $k$, negative at an ingress node $n$ and positive at an egress node. Often it is practical to let the flow of commodity $k$ represent all traffic with a certain destination, i.e. traffic from many ingress nodes to one egress node. When regarding intra-domain routing and the destination is another domain to which there are more than one link, that domain may be represented by one egress node in the model. Then the destination node $t$ is used for identifying the commodity k. The routing is represented by a flow matrix $X = (Xa,k)$ where $X_{a,k} \geq 0$ .

The reason for load balancing is that high offered loads on links cause traffic disturbances. This disturbance is expressed as a cost for each arc a cost function $f_a$ on the total flow

$$y_a = \sum_k X_{a,k}$$

The link load is defined by $y_a/c_a$, i.e. the flow normalized by the capacity.

Disregarding loss in the network the load balancing problem can be formulated as a cost minimization multi-commodity flow problem:

$$\textbf{LBP:} \ \text{Minimize} \ F(\mathbf{X}) = \sum_a f_a\left(\sum_k X_{a,k}\right) \tag{1}$$

when

$$\mathbf{A} \cdot \mathbf{X} = \mathbf{B}$$
$$\mathbf{X} \geq 0$$

The cost functions $f_a$ should obviously be increasing. The **LBP** formulation is equivalent to the one in [FT00]. It does not include the formulation of [WWZ01] where the target was to minimize the maximal link load. That result could be achieved by choosing "very convex" cost functions, e.g. $f_a(y_a)=c_a(y_a/c_a)^p$ for a large $p$. The formulation here is much more flexible and can be modelled to represent the actual traffic performance dependant on the load. It can expected that the traffic performance is insensitive to the load when the load is low enough. For this reason an plausible type of cost function is

$$f_a(y_a) = g_a y_a + h_a y_a^p \tag{2}$$

for some coefficients $g_a$ and $h_a$. Cost functions of this type have been used for studying vehicle traffic on road networks.

In many papers the load balancing problem has been presented as minimizing the overall delay. That may have been the most important aspect in early networks with high queuing delay at low speed links. Today loss and throughput are generally more important. The behaviour of these parameters is complex and analytically derived expression for the traffic disturbance function $f_a$ cannot be anticipated.

Efficient routing

The term *inefficient* is proposed for routing $X$ if there is another routing with lower load on some link without having higher load any other link, i.e. a routing $X'$ satisfying the same demand, $A \cdot X = A \cdot X'$, and with

$$\sum_k X'_{a,k} \le \sum_k X_{a,k}$$

for all a and with

$$\sum_k X'_{a,k} < \sum_k X_{a,k}$$

for at least one a

A routing $X$ that is not inefficient is said to be efficient. Note that Wang [WWZ01] used the term *loopy* routing instead of inefficient routing.

If the cost functions $f_a$ are strictly increasing, then any (optimal) solution to LBP must be an efficient routing.

If the cost functions $f_a$ are strictly increasing and $X$ is an (optimal) solution to LBP, then there exists an arc metric $w = (w_a)$ with $w > 0$ so that the flow of each commodity is routed on shortest paths with respect to $w$. It is proven in Wang [WWZ01] that any efficient routing has this property. This is a strong motivation for the use of metrics for network routing. One should not think that this means that the optimal solution will obtain by just routing the flow on the shortest paths. There may be more than one shortest path between a source and a sink. For the load-balancing problem it is normal that the cost functions $f_a$ are convex. At least some equal shortest paths should then expected. To obtain the optimal solution one then has to split the flow in the correct way on the equal shortest paths. It is only in special cases correct to split the flow in equal parts, which is the approach used by Equal Cost

To express the optimal solution for MultiPath the load balancing problem by the flow matrix $X$ is not suitable for a distributed implementation that should be resilient to traffic variation. It is preferable to use load sharing parameters $\Phi_{a,t}$ the proportion of flow at node $n_{\overline{a}}$ to destination $t$ that is to be routed on arc $a$

If $a0$ is an arc going out from node $n$, it can be calculate $\Phi$ from $X$ by

$$\Phi_{a0,t} = X_{a0,t} \bigg/ \sum_{\substack{a \\ n_{\overline{a}} = n}} X_{a,t}$$

Inversely, from the load sharing parameters $\Phi$ and the demand $B$ the flow $X$ can be determined by a linear equation system, see [Ga177]. Also the individual flows from each ingress to each egress are easily obtained.

Bottleneck Load Balancing is a simple and well-defined approach of the type Resource-directive load balancing.

For a current load sharing $\Phi_{a,t}$ and measured link loads $\rho_a$ recursively bottleneck load $R_{a,t}$ are defined from link a to destination t and bottleneck load $R_t^n$ from node $n$ to $t$ by

$$R_t^t = 0$$

$$R_{a,t} = \max\left(\rho_a^{'}, R_t^{n_a}\right) \quad \text{and} \tag{3}$$

$$R_t^n = \sum_{\substack{a \\ n_{\bar{a}}=n}} \Phi_{a,t} R_{a,t} \quad \text{if} \quad n \neq t$$

This means that $R_t^n$, the bottleneck load from node $n$, is a weighted average of the bottleneck loads of the outgoing links used for routing towards $t$. In a network the parameters can be calculated in a distributed way by signalling between adjacent nodes starting from $t$. They are used for updating the load sharing parameters. It could also take account of packet loss on links if this is measured. With $loss_a$ being the packet loss of link $a$, it could instead define

$$R_{a,t} = \max\left( \rho_a, R_t^{n_a} \right)/(1 - loss_a) \tag{4}$$

This modified expression representing offered load instead of carried load could improve the load balancing in case of a general overload. To use "equivalent loading" defined in OMP draft [Vil99a] seems less stable as it involves an assumed behaviour of TCP flow control.

For a destination $t$ let at a considered node $n$ the current load sharing parameters be $\Phi_{a,t}$ and the bottleneck load to $t$ for each utilised arc be $R_{a,t}$. If the bottlenecks are precisely the outgoing links of the node $n$, one should in order to obtain equal loads choose the new load sharing parameters proportionate to

$$\Phi_{a,t}/R_{a,t}$$

When the bottlenecks are further down the paths, a small such update can be anticipated. However such an expression may behave badly if either the nominator or the denominator is close to 0. Furthermore, a link previously with $\Phi_{a,t}=0$, should receive some load precisely when its bottleneck load is smaller than the average. To adjust for these aspects the new load sharing could be set proportionate to

$$\left( \frac{\Phi_{a,t} + \varepsilon}{R_{a,t} + \delta} - \frac{\varepsilon}{R_t^n + \delta} \right)^+ \tag{5}$$

for some suitable $\varepsilon$ and $\delta$, e.g. $\varepsilon=0.05$ and $\delta=0.1$. If the network includes links with capacities very much lower than the largest, one should use a smaller $\varepsilon$.

By this method one could dynamically update the load balancing in a network with fixed link weights. Updating only the load sharing parameters has the advantage that this never creates any routing loops. To be useful there must be alternative paths of the same lengths. For this reason it is good to use identical weights on many links, e.g. 1. The load sharing technique could also be combined with a simple dynamic update of the weights. If a link after a number of updates of the load sharing parameters still has a too high load its weight by 1 could increased.

Load balancing in MPLS

Load balancing in MPLS based on bottleneck load along the paths is easily applied. One difference using load balancing in MPLS compared to using it on equal cost paths is that MPLS generally does not provide *efficient* routings as defined in "formulation of load balancing as flow optimisation". It depends on the design of the label switched paths how far from optimal such routings might be.

In MPLS the ingress node controls the paths used to the egress. Thus the ingress node can calculate the bottleneck load of the paths, provided that loss and load of the links have been broadcasted over the network. The distributed recursive calculation of path bottleneck load as in " Bottleneck Load Balancing for a fixed routing metric" is not needed.

Tests performed on the Bottleneck Load Balancing

The proposal Bottleneck Load Balancing has been tested with a fluid flow network model with static traffic. The tests have been for grid networks with random generated traffic matrices. The traffic from node $m$ to node $n$ is determined by the expression $X_m Y_n Z_{m,n}$ where all random variables are independent and where $X_m$ and $Y_n$ are uniformly distributed between 0.1 and 1 while $Z_{m,n}$ is uniformly distributed between 0 and 1. This means that originating and terminating traffic at a node will be independent and will have a range of about a factor 10. All the links have the same capacity and the same link weight. The parameters are set to $\varepsilon=0.05$ and $\delta=0.1$. The initial routing is determined by Equal Cost MultiPath.

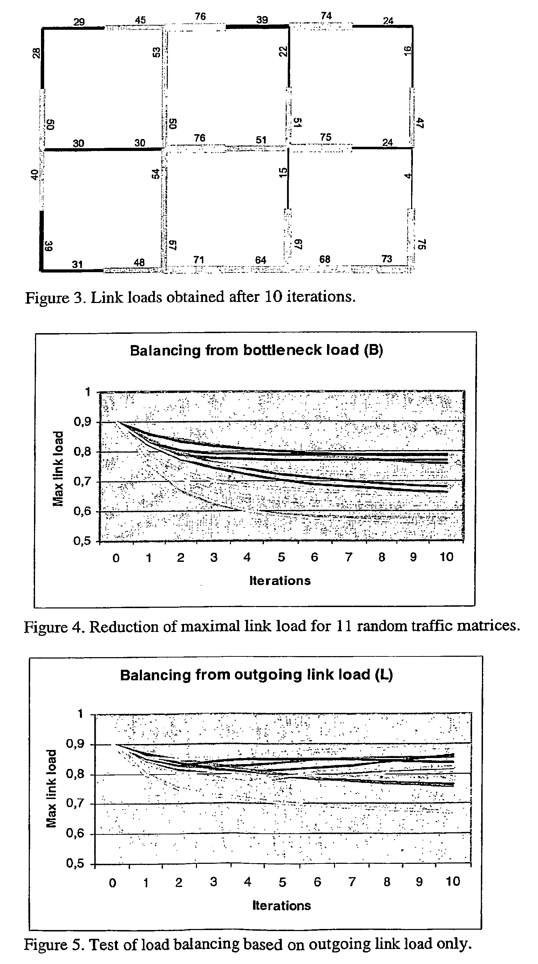

Figure 1. Link loads (%) for an initial routing with ECMP on a 3×4 node grid network. The part of a link close to a node represents the outgoing direction. The initial routing of Figure 1 is after ten iterations changed to the one in Figure 3.

The result of the Bottleneck Load Balancing is of course dependent on the existence of alternative paths. The well-balanced routing of figure 3 could be achieved although 5/11 of the traffic demands in a 3x4 node grid network have no allowed alternative path.

The diagram in figure 4 is for the 3x4 node network tested for 11 different traffic matrices. For each matrix, the link capacities are determined to give a maximal link load of 90% for the initial routing. In all cases, the load balancing method gives a monotone reduction of the maximal link load and it is after ten iterations between 56% and 79%. The reduction is largest in the first iterations.

The proposed method requires a signalling protocol to determine the bottleneck loads. It would be simpler if one could do without it, with each node just trying to equalise the load on its outgoing links. One can try this by using the same formula for updating the load sharing parameters, but substituting the bottleneck load with the outgoing link load, i.e. $R_{a,t} \approx \rho_a$. This has been tested in the next diagram, figure 5, for the same traffic matrices. Test of load balancing based on outgoing link load only. It gives an apparently worse load balancing, where in many cases the maximal link load in the first iterations decreases but then increases. The maximal link load is after ten iterations between 67% and 88%. Comparing the average values shows the superiority of the Bottleneck Load Balancing that after ten iterations reaches 69% while the method based on outgoing link load gets 81%.

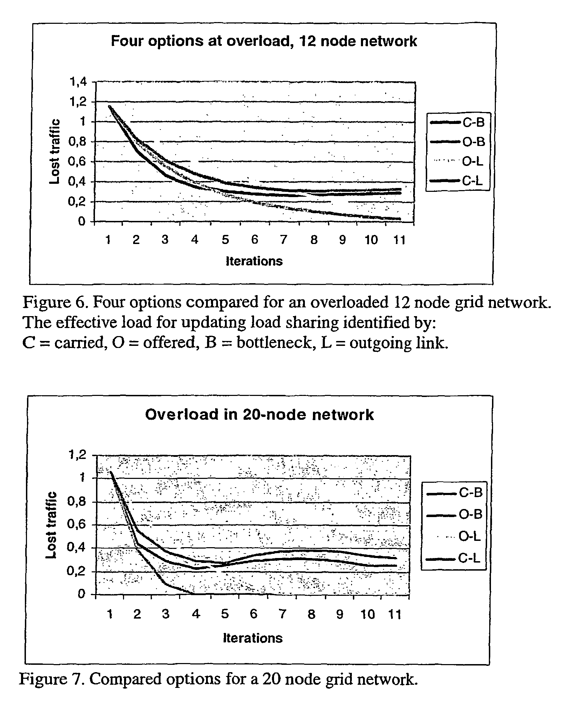

The Bottleneck Load Balancing has also been tested in an overloaded network. In that case, one has the option to base the method on carried link load or offered link load defined as (carried link load)/(1-link loss). Here is it considered more relevant to compare the traffic loss than the maximal link load. In figure 6, four options compared for an overloaded 12 node grid network. The effective load for updating load sharing identified by: C = carried, O = offered, B = bottleneck, L = outgoing link. This has been done for the 3×4 node network in figure 6 and a 4x5 node network in figure 7. Compared options for a 20 node grid network. It can again be seen that it is better to use bottleneck load than outgoing link load. It can also see that a better load balancing was obtained when basing the method on offered link load than carried link load. However, this initial result for a fluid flow network with static traffic does of course not give the full picture for the packet switched IP network with TCP flow control.

**Claims**

1. A method for load balancing for IP routes traffic, wherein the load balancing is based on load sharing parameters, **characterised in that** bottleneck loads are calculated starting from a destination t, such that they represent the maximal link load along a path a and an average value of the maximal link loads in case that a path is split up in more than one, and **in that** the load sharing parameters for outgoing links at a node n for the destination t are updated iteratively by setting them proportional to $\Phi_{a,t}/R_{a,t}$, the value of the previous iteration divided by the bottleneck load, whereby load sharing parameters to a destination are updated to level out the bottleneck to the destination.

2. A method according to claim 1, **characterised in that** load sharing parameters depend on link weights and link lengths of the shortest paths for determining allowed routing alternatives.

3. A method according to claim 1 or 2, **characterised in that** the load sharing parameters uses bottleneck loads for each of alternative routes.

4. A method according to any of previous claims, **characterised in that** the bottleneck loads are determined through a special protocol starting from each destination (t), such that they represent the maximal link load along a path (a) and an average value of the maximal link loads in case that a path is split up in more than one.

5. A method according to any of previous claims, **characterised in that** the load sharing parameters are determined by using the determined bottleneck loads in order to level out the bottleneck loads.

6. A method according to any of previous claims, **characterised in that** the bottleneck loads are determined for each link to use a weighted average for each link.

7. A computer program comprising program steps to perform all of the method steps according to one of the patent claims 1 - 6.

8. A computer with a readable memory comprising instructions for performing steps according to all of the method steps in one of above patent claims 1 - 6.

**Patentansprüche**

1. Verfahren zum Lastausgleich für IP-Routenverkehr, wobei der Lastausgleich auf Lastteilungsparametem beruht, **dadurch gekennzeichnet, dass** Engpasslasten beginnend von einem Ziel t derart berechnet werden, dass sie die Maximalverbindungslast entlang eines Pfades a und einen Mittelwert der Maximalverbindungslasten für den Fall, dass ein Pfad in mehr als einen aufgeteilt wird, repräsentieren und dass die Lastteilungsparameter für ausgehende Verbindungen an einem Knoten n für das Ziel t iterativ aktualisiert werden, indem sie proportional zu $\Phi_{a,t}/R_{a,t}$ gesetzt werden, das heißt, der Wert der vorhergehenden Iteration geteilt durch die Engpasslast, wobei Lastteilungsparameter für ein Ziel aktualisiert werden, um den Engpass zu dem Ziel auszugleichen.

2. Verfahren nach Anspruch 1, **dadurch gekennzeichnet, dass** die Lastteilungsparameter auf Verbindungsgewichten und Verbindungslängen der kürzesten Pfade zum Bestimmen erlaubter Routenalternativen abhängen.

3. Verfahren nach Anspruch 1 oder 2, **dadurch gekennzeichnet, dass** die Lastteilungsparameter Engpasslasten für jede Alternativroute verwenden.

4. Verfahren nach einem der vorstehenden Ansprüche, **dadurch gekennzeichnet, dass** die Engpasslasten durch ein Spezialprotokoll beginnend von jedem Ziel (t) derart bestimmt werden, dass sie die Maximalverbindungslast entlang eines Pfades (a) und einen Mittelwert der Maximalverbindungslasten in dem Fall repräsentieren, dass ein Pfad in mehr als einen aufgeteilt wird.

5. Verfahren nach einem der vorstehenden Ansprüche, **dadurch gekennzeichnet, dass** die Lastteilungsparameter bestimmt werden durch die bestimmten Engpasslasten, um die Engpasslasten auszugleichen.

6. Verfahren nach einem der vorstehenden Ansprüche, **dadurch gekennzeichnet, dass** die Engpasslasten für jede Verbindung bestimmt werden, um ein gewichtetes Mittel für jede Verbindung zu verwenden.

7. Computerprogramm mit Programmschritten zur Durchführung aller Verfahrensschritte nach einem der Patentansprüche 1-6.

8. Computer mit einem lesbaren Speicher mit Befehlen zum Durchführen der Schritte entsprechend allen Verfahrensschritten in einem der obigen Patentansprüche 1-6.

**Revendications**

1. Procédé d'équilibrage des charges pour trafic sur routes IP, dans lequel l'équilibrage des charges se base sur des paramètres de répartition des charges, **caractérisé en ce que** des charges formant goulot d'étranglement sont calculées à partir d'une destination (t), de sorte qu'elles représentent la charge de lien maximale le long d'un chemin (a) et une valeur moyenne des charges de lien maximales dans le cas où un chemin se divise en plus d'un, et **en ce que** les paramètres de répartition des charges pour des liens sortants au niveau d'un noeud (n) pour la destination (t) sont remis à jour itérativement en les définissant proportionnels à $\Phi_{a,t}/R_{a,t,}$ la valeur de l'itération précédente divisée par la charge de goulot d'étranglement, moyennant quoi les paramètres de répartition des charges vers une destination sont remis à jour pour équilibrer le goulot d'étranglement vers la destination.

2. Procédé selon la revendication 1, **caractérisé en ce que** les paramètres de répartition des charges dépendent des poids des liens et des longueurs des liens des chemins les plus courts pour déterminer les alternatives de routage permises.

**3.** Procédé selon la revendication 1 ou 2, **caractérisé en ce que** les paramètres de répartition des charges utilisent des charges de goulot d'étranglement pour chacune des routes alternatives.

**4.** Procédé selon l'une quelconque des revendications précédentes, **caractérisé en ce que** les charges de goulot d'étranglement sont déterminées à travers un protocole spécial partant de chaque destination (t), de sorte qu'elles représentent la charge de lien maximale le long d'un chemin (a) et une valeur moyenne des charges de lien maximales dans le cas où un chemin se divise en plus d'un.

**5.** Procédé selon l'une quelconque des revendications précédentes, **caractérisé en ce que** les paramètres de répartition des charges sont déterminés en utilisant les charges de goulot d'étranglement déterminées afin d'équilibrer les charges de goulot d'étranglement.

**6.** Procédé selon l'une quelconque des revendications précédentes, **caractérisé en ce que** les charges de goulot d'étranglement sont déterminées pour chaque lien en utilisant une moyenne pondérée pour chaque lien.

**7.** Programme informatique, comprenant des étapes de programme pour exécuter toutes les étapes de procédé selon l'une des revendications de brevet 1 à 6.

**8.** Ordinateur avec mémoire lisible comprenant des instructions pour exécuter les étapes selon toutes les étapes de procédé dans l'une des revendications de brevet 1 à 6.

Figure 1. Link loads (%) for an initial routing with ECMP on a 3×4 node grid network. The part of a link close to a node represents the outgoing direction.

Figure 2. Bottleneck load parameters $R_{a,t}$ added to figure 1 for the destination $t$

EP 1 535 433 B1

Figure 3. Link loads obtained after 10 iterations.

Figure 4. Reduction of maximal link load for 11 random traffic matrices.

Figure 5. Test of load balancing based on outgoing link load only.

**Four options at overload, 12 node network**

Figure 6. Four options compared for an overloaded 12 node grid network. The effective load for updating load sharing identified by:
C = carried, O = offered, B = bottleneck, L = outgoing link.

**Overload in 20-node network**

Figure 7. Compared options for a 20 node grid network.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20010043585 A1

**Non-patent literature cited in the description**

- **A. KHANNA ; J. ZINKY.** The revised ARPANET routing metric. *Proc. of ACM SIGCOMM'89,* September 1989, 45-56
- **B. FORTZ ; M. THORUP.** Internet traffic engineering by optimising OSPF weights. *Proceedings of INFOCOM'2000,* March 2000
- **C. VILLAMIZAR.** MPLS Optimised Multipath (MPLS-OMP. *Internet Draft,* 18 August 1999
- **C. VILLAMIZAR.** OSPF Optimised Multipath (OSPF-OMP. *Internet Draft,* 18 August 1999
- **S. VUTUKURY ; J.J. GARCIA-LUNA-ACEVES.** A simple approximation to minimum delay routing. *ACM SIGCOMM,* September 1999
- **ZHIRUO CAO ; ZHENG WANG ; ELLEN ZEGURA.** Performance of Hashing-Based Schemes for Internet Load Balancing. *IEEE INFOCOM 2000,* March 2000